(19) Europäisches Patentamt
European Patent Office
Office européen des brevets

(11) **EP 2 384 563 B1**

(12) **EUROPEAN PATENT SPECIFICATION**

(45) Date of publication and mention
of the grant of the patent:
**17.07.2013 Bulletin 2013/29**

(21) Application number: **10703122.1**

(22) Date of filing: **27.01.2010**

(51) Int Cl.:
*H04L 9/32* $^{(2006.01)}$

(86) International application number:
**PCT/IB2010/050367**

(87) International publication number:
**WO 2010/086803 (05.08.2010 Gazette 2010/31)**

(54) **VERIFICATION OF DATA ITEMS IN DATA PROCESSING SYSTEMS**

ÜBERPRÜFUNG VON DATENOBJEKTEN IN DATENVERARBEITUNGSSYSTEMEN

VÉRIFICATION D'ÉLÉMENTS DE DONNÉES DANS DES SYSTÈMES DE TRAITEMENT DE DONNÉES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.01.2009 EP 09151832**

(43) Date of publication of application:
**09.11.2011 Bulletin 2011/45**

(73) Proprietor: **International Business Machines
Corporation
Armonk, NY 10504 (US)**

(72) Inventors:
• **CAMENISCH, Jan
CH-8803 Rueschlikon (CH)**
• **SORIENTE, Claudio
E-28004 Madrid (ES)**

(74) Representative: **Meyer, Michael Josef et al
IBM Research GmbH
IBM Research - Zurich
Intellectual Property Law
Säumerstrasse 4
8803 Rüschlikon (CH)**

(56) References cited:
**EP-A1- 1 848 143**

• **CAMENISCH J ET AL: "Dynamic accumulators
and application to efficient revocation of
anonymous credentials" LECTURE NOTES IN
COMPUTER SCIENCE, SPRINGER, DE LNKD-
DOI:10.1007/3-540-45708-9_5, vol. 2442, 1
January 2002 (2002-01-01), pages 61-76,
XP002391625 ISSN: 0302-9743 cited in the
application**
• **BONEH D ET AL: "Short group signatures"
LECTURE NOTES IN COMPUTER SCIENCE,
SPRINGER, DE, vol. 3152, 19 August 2004
(2004-08-19), pages 41-55, XP002438499 ISSN:
0302-9743 cited in the application**

**Description**

This invention relates generally to verification of data items such as cryptographic credentials in data processing systems. Methods, apparatus and computer programs are provided to facilitate such verification processes in data processing systems.

There is often a need to perform some form of verification process in connection with data items associated with some party to a data processing system. It may be necessary, for example, for a party to prove possession of a data item, or possession of a valid or authentic data item, to another party to the system. Such a proof may also need to be made in a manner that does not disclose the data item itself, or indeed reveal any other information about the data item or proving party so as to preserve anonymity and user privacy generally. A common example is provided by cryptographic credentials. A cryptographic credential is typically a cryptographic signature, certificate or other cryptographic token which is issued to a user by a trusted party (the "issuer"). The credential can then be used subsequently in communications between the user and another party (the "verifier", who may or may not be the issuer) as proof of the information for which the credential was issued. A typical scenario involves a user connecting to a remote server via a data communications network and using the credential to demonstrate authorization to access to some restricted service or other resource. The following discussion will focus primarily on cryptographic credentials, though similar considerations can apply to other data items, for example any secret data, about which proofs may need to be made to a verifier.

The verification process for data items often involves proving that the data item is one of a defined set of data items. In the case of cryptographic credentials, for example, it may be necessary to prove that a credential is on a list of authentic or valid credentials. In particular, a credential's validity may be transitory, either because it is issued for a limited time period or because it is revoked for some other reason after issuance. In the former case, expiration date could be included in the credential (e.g. as one of the components, or "attributes", of data encrypted in the credential) and checked by a verifier to ensure validity. However, in the latter case where unexpected events may require early revocation (invalidation) of a credential, a verifier requires additional information from the issuer (or other trusted party) to confirm validity. For example, when a user resigns from his job, a credential allowing him to access the workplace should be invalidated. A more poignant example is the need to revoke a credit-card-like credential which has been compromised and used by malicious parties for illegal purchases. In such cases the verifier needs to check the validity of credentials with a trusted party.

The need for verifiers to check validity of credentials raises various issues, particularly where privacy is a primary concern. In scenarios where anonymity is not an issue, an identifier such as a serial number associated with a credential can be revealed to a verifier during a transaction. The verifier could then check this against a list of revoked credential id's that is periodically published by the issuer. Another solution is for the verifier to send certificate revocation status queries to an online issuer. The former solution is communication inefficient as the list of revoked certificates can be very large, while the latter solution requires the issuing authority to be permanently online. Both solutions require knowledge of credential id's by all parties, breaking user privacy. Anonymous credential systems, however, require transactions between users, issuers and verifiers to be performed in such a way that users disclose only the minimum amount of information required for a transaction to take place. Moreover, issuers cannot learn which credential attributes are shown to verifiers, and issuers and verifiers cannot link the user transactions. As anonymous credential systems are aimed at protecting user anonymity and transaction unlinkability, issuers and verifiers cannot learn certificate id's during transactions and alternative revocation status check techniques are required.

One known technique for addressing the above issue employs cryptographic accumulators. A cryptographic accumulator allows a large set of inputs to be hashed in a single short output, namely the accumulator. Evidence that a given input is indeed contained in the accumulator is then provided by an accumulator witness. For example, if the accumulator ($ACC$) is defined by $F(x_1, ..., x_n) = ACC$ for inputs $x_1$ to $x_n$, then proving that a given input $x_i$ is contained in $ACC$ requires a witness $w_i$ and existence of a verification function $V$ such that $V(x_i, w_i) = ACC$. Security is assured by the feature that if $x_y$ is not contained in the accumulator, computing $w_y$ such that $V(x_y, w_y) = ACC$ is infeasible. When applied in the scenario described above, the serial numbers of all currently valid credentials are accumulated and the resulting accumulator is published. Users can then demonstrate to verifiers that their credential is still valid by using their witness to prove (in zero-knowledge) that their credential's serial number is contained in the published accumulator. Such systems have been described in: "Short group signatures", Boneh et al., in Matthew K. Franklin, editor, Advances in Cryptology - CRYPTO 2004, volume 3152 of LNCS, pages 41-55, Springer Verlag, 2004; and "Dynamic accumulators and application to efficient revocation of anonymous credentials", Camenisch and Lysyanskaya, in Moti Yung, editor, Advances in Cryptology - CRYPTO 2002, volume 2442 of LNCS, pages 61-76, Springer Verlag, 2002. A drawback of these solutions, however, is that users need to update their accumulator witnesses and an update requires at least one modular exponentiation for each newly revoked credential. Since there can be large numbers of revoked credentials in typical applications, these solutions incur a substantial computational (and communications) cost, and in particular a far greater cost than can be handled by a resource-limited user device such as a smart card. For example, the Camenisch and Lysyanskaya reference above introduces a dynamic accumulator and shows its applicability to revocation in anonymous credential systems as well as identity escrow and group signatures. Update of the proposed accumulator, as well as user witnesses, requires a number of exponentiations linear in the number of users added to or revoked from the system. This accumulator is extended, introducing witnesses and proofs that a value was not accumulated, in "Universal accumulators with efficient nonmembership proofs", Jiangtao Li et al., in Jonathan Katz and Moti Yung, editors, ACNS, volume 4521 of Lecture Notes in Computer Science, pages 253-269, Springer, 2007.

A dynamic accumulator is constructed from bilinear pairings in "Accumulators from bilinear pairings and applications", Lan Nguyen, in Alfred Menezes, editor, CT-RSA, volume 3376 of Lecture Notes in Computer Science, pages 275-292, Springer, 2005. Application of this system to an anonymous credential system results in very large system parameters (a number of elements linear in the number of accumulatable values) that need to be stored by each user in order to prove validity of their credential. Also, it is pointed out that this accumulator is not secure, and that any party can succeed in an anonymous identification protocol without any secret knowledge, in "Cryptanalysis and improvement of an ID-based ad-hoc anonymous identification scheme", Zhang and Chen, at CT-RSA 05, 2005. Moreover, updating a witness takes one exponentiation per event and is therefore not efficient (in the paper the authors write multiplication and use addition as base operation for the algebraic group as is done sometimes in connection with bi-linear maps and elliptic curve groups (see the Nguyen reference above)).

A dynamic accumulator for batch update is proposed in "A new dynamic accumulator for batch updates", Peishun Wang et al., in Sihan Qing et al., editors, ICICS, volume 4861 of Lecture Notes in Computer Science, pages 98-112, Springer, 2007. Users who missed many witness updates can request update information to the issuer and update their witness with one multiplication. This scheme would not be usable for applications such as credential revocation however. For example, it is not apparent how one would achieve an efficient proof of knowledge of an element contained in the accumulator as is needed for use of the accumulator for revocation of credentials.

EP 1 848 143 A1 discloses a member-certificate acquiring device which is input with a group public key and a random number and outputs a member certificate and a member secret key by communicating with a member-certificate issuing device.

One aspect of the present invention provides a method for providing a cryptographic accumulator, indicative of a set of data items, in a data processing system. The method comprises:

> generating a plurality of group elements;
> defining a mapping between data items in said set and respective group elements;
> generating a cryptographic accumulator comprising the product of respective group elements related to the group elements mapped to the data items in the set; and
> publishing the cryptographic accumulator in the data processing system. The method further comprises:

> generating each group element using a secret value $\gamma$ and a group generator $g$, wherein:

>> the group elements comprise respective elements $g_i = g^{\gamma^i}$ for i $\in$ {1, 2, 3, ..., $n$} where n is a predefined maximum number of data items in the set; and
>> the mapping is defined between data items in the set and respective group elements $g_i$, wherein the cryptographic accumulator comprises the product of the group elements $g_{n+1-i}$ for values of $i$ for which the group element $g_i$ is mapped to a data item in said set, further including generating a witness for each data item in the set, each witness comprising the product of a respective different subset of the group elements, the subset for each witness being dependent on the data items in said set and the data item for which that witness is generated, wherein:

>> the group elements include auxiliary elements $g_{n+2} = g^{\gamma^{n+2}}$, $g_{n+3} = g^{\gamma^{n+3}}$, $g_{n+4} = g^{\gamma^{n+4}}$, ..., $g_{2n} = g^{\gamma^{2n}}$; and

>> for each data item in the set mapped to a group element $g_i$, the witness comprises the product of the group elements $g_{n+1-j+i}$ for all values of $j$ for which a group element $g_j$ is mapped to another data item in the set.

Methods embodying this aspect of the invention may offer fast and efficient accumulator-based systems for use in verification of data items such as cryptographic credentials, in particular for indicating a particular set of such data items in the data processing system. This may be used, for example, to define a set of authentic or currently valid data items in use in the data processing system. The efficiency is such that embodiments of the invention are readily applicable to credential revocation. The accumulation is fast, complexity being linear in the number of data items in the set. The complexity of accumulator updates is linear in the number of changes, i.e. the number of data items added or removed from the set. The system also provides the basis for fast and efficient computation and updates of accumulator witnesses. In particular, computation of witnesses in embodiments described below is linear in the number of data items in the set, and update of each witness is linear in the number of changes. Witness update can thus be achieved with a single multiplication. The improvement in computational complexity allows convenient application in data processing systems involving resource-constrained devices with limited computational power. This will be discussed further below. Moreover, as demonstrated by example below, the system provides the basis for efficient proof protocols for proving membership of the set as required for privacy applications such as credential revocation.

In general, the data items to which the invention is applied could be any items of data about which some fact, e.g. validity, authenticity or simple possession of a data item, is to be proved to a verifier by reference to the accumulator. Data items could, for example, comprise secret data with properties to be proved to a verifier, without revealing the data itself, by demonstrating inclusion of the data item in the set indicated by the accumulator. In typical applications, however, the data items will be cryptographic items, and in particular cryptographic credentials as already discussed.

Depending on the application, the set of data items may be dynamic, whereby items may be added and/or removed from the set over time. The mapping of data items to group elements, and conceivably also the generation of group elements, might then be performed progressively as new data items are added to a dynamic set. Also depending on application, group elements previously mapped to data items removed from the set may or may not be reassigned to new data items. In any case, for dynamic sets the cryptographic accumulator may be generated periodically to reflect changes in the set contents. At any time therefore, the accumulator should comprise the product of group elements related to the elements mapped to items currently in the set. Once generated, the accumulator is published in the data processing system so as to be available for use by components of the system involved in subsequent verification of data items. Systems might be envisaged where publication could be effected by transmitting the accumulator directly to relevant system components. More usually, however, publication will be effected by providing access to the accumulator via one or more data communications channels in the system, whereby system components can access the accumulator when required for verification purposes.

The processes of updating the accumulator for dynamic sets, and generating and updating witnesses for data items, will be described in detail below. Briefly, however, in the preferred embodiments the witnesses for data items comprise the products of respective different subsets of the group elements, the subset for each witness being dependent on the data items in said set and the data item for which that witness is generated. Computation and updating of these witnesses is fast and efficient. In particular, updating of a witness to reflect changes in the set of data items can ideally be done by a single multiplication.

A second aspect of the invention provides apparatus for providing a cryptographic accumulator, indicative of a set of data items, in a data processing system. The apparatus comprises memory, and control logic adapted to perform a method according to the first aspect of the invention, the plurality of group elements being stored in said memory.

A third aspect of the invention provides a data processing system comprising a user computer, a verifier computer and a data item management computer each adapted for communication via a data communications network. The data item management computer is adapted to perform a method according to the first aspect of the invention for providing a cryptographic accumulator indicative of a set of data items which includes a user data item associated with said user computer. The user computer stores said user data item and a witness, corresponding to the user data item, for the cryptographic accumulator. The user computer and verifier computer are adapted for communication via the network to implement a verification protocol proving knowledge by the user computer of a witness corresponding to a data item in the set indicated by the cryptographic accumulator. The verification protocol is preferably a zero-knowledge proof protocol.

A fourth aspect of the invention provides a computer program comprising program code means for causing a computer to perform a method according to the first aspect of the invention. It will be understood that the term "computer" is used herein in the most general sense and includes any device, component or system having a data processing capability for implementing a computer program. Moreover, a computer program embodying the invention may constitute an independent program or may be an element of a larger program, and may be supplied, for example, embodied in a computer-readable medium such as a disk or an electronic transmission for loading in a computer. The program code means of the computer program may comprise any expression, in any language, code or notation, of a set of instructions intended to cause a computer to perform the method in question, either directly or after either or both of (a) conversion to another language, code or notation, and (b) reproduction in a different material form.

In general, where features are described herein with reference to an embodiment of one aspect of the invention, corresponding features may be provided in embodiments of another aspect of the invention.

Preferred embodiments of the invention will now be described, by way of example, with reference to the accompanying drawings in which:

Figure 1 is a schematic illustration of a data processing system embodying the invention;

Figure 2 indicates a setup procedure performed by an issuer computer in the Figure 1 system;
Figure 3 indicates subsequent operation of the issuer computer of Figure 1;
Figure 4 illustrates interaction between a user computer and a verifier computer in the Figure 1 system; and
Figure 5 illustrates interaction between a user computer and a verifier computer in a preferred implementation of the Figure 1 system.

Before describing data processing systems embodying the invention, we first present various assumptions and cryptographic tools used as building blocks which are employed in operation of the exemplary embodiments to be described.

A function $\upsilon$ is *negligible* if, for every integer $c$, there exists an integer K such that for all $k > K$, $|\upsilon(k)| < 1 / k^c$. A problem is said to be *hard* (or *intractable)* if there exists no probabilistic polynomial time (p.p.t.) algorithm on the size of the input to solve it.

Bilinear Pairings. Let G and $G_T$ be groups of prime order $q$. A map $e : G \times G \to G_T$ must satisfy the following properties:

(a) Bilinearity: a map $e : G \times G$ -7 $G_T$ is bilinear if $e(a^x, b^y)t = e(a,b)^{x,y}$
(b) Non-degeneracy: for all generators g, $h \in G$, $e(g, h)$ generates $G_T$;
(c) Efficiency: There exists an efficient algorithm BMGen($1^k$) that outputs $(q, G, G_T, e,$ g) to generate the bilinear map and an efficient algorithm to compute $e(a, b)$ for any $a, b \in G$.

Security is based on the following number-theoretic assumptions. The accumulator construction in the embodiments to be described is based on the Diffie-Hellman Exponent assumption. The unforgeability of credentials is based on the Strong Diffie-Hellman assumption. For credential revocation we need to prove possession of an accumulator witness for a credential. This proof is based on our new Hidden Strong Diffie-Hellman Exponent (SDHE) assumption.

Definition 1 (n-DHE). Diffie-Hellman Exponent (DHE) assumption: The n-DHE problem in a group $G$ of prime order $q$ is defined as follows: Let $g_i = g^{\gamma^i}$ , $\gamma \leftarrow_R Z_q$. On input $\{g, g_1, g_2, ..., g_n, g_{n+2}, ..., g_{2n}\} \in G^{2n}$ output $g_{n+1}$.

The n-DHE assumption states that this problem is hard to solve.

In "Hierarchical identity based encryption with constant size ciphertext", Boneh et al., pages 440-456 of Cramer, editor, Advances in Cryptology - EUROCRYPT 2005, 24th Annual International Conference on the Theory and Applications of Cryptographic Techniques, Aarhus, Denmark, May 22-26, 2005, Proceedings, volume 3494 of Lecture Notes in Computer Science, Springer, 2005, the authors introduced the Bilinear Diffie-Hellman Exponent (BDHE) Assumption that is defined over a bilinear map. Here the adversary has to compute $e(g,h)^{\gamma^{n+1}} \in G_T$.

Lemma 1. The n-DHE assumption for a group G with a bilinear pairing $e : G \times G \to G_T$ is implied by the n-BDHE assumption for the same groups.

Boneh and Boyen introduced the Strong Diffie-Hellman assumption in "Short signatures without random oracles", Dan Boneh and Xavier Boyen, in Christian Cachin and Jan Camenisch, editors, EUROCRYPT, volume 3027 of Lecture Notes in Computer Science, pages 56-73. Springer, 2004.

Definition 2 (n-SDH - see preceding reference "Short signatures without random oracles"). On input $g, g^x, g^{x^2}, ..., g^{x^n} \leftarrow G,$ it is computationally infeasible to output $(g^{1/(x+c)}, c)$.

In "Full-domain subgroup hiding and constant-size group signatures", Boyen and Waters, in Tatsuaki Okamoto and XiaoyunWang, editors, Public Key Cryptography, volume 4450 of Lecture Notes in Computer Science, pages 1-15, Springer, 2007, the authors introduced the Hidden Strong Diffie-Hellman assumption to allow using BB signatures (see "Short signatures without random oracles" referenced above) in a situation where the messages are unknown. We require a variant of the Hidden Strong Diffie-Hellman assumption that we call the Hidden Strong Diffie-Hellman Exponent (n-HSDHE) assumption. The two assumptions are hitherto incomparable.

Definition 3 (n-HSDHE). On input g, $g^x, u \in$ G, $\{g^{1/(x+y^i)}, g^{\gamma^i}, u^{\gamma^i}\}_{i=1...n}$ and $\{g^{\gamma^i}\}_{i=n+2...2n}$ , , it is computationally infeasible to output a new tuple $\{g^{1/(x+c)}, g^c, u^c\}$.

Known Discrete-Logarithm-Based, Zero-Knowledge Proofs

In the common parameters model we use several known results for proving statements about discrete logarithms. When referring to such proofs, we will follow the notation introduced by Camenisch and Stadler ("Proof systems for general statements about discrete logarithms", Jan Camenisch and Markus Stadler, Technical Report TR 260, Institute for Theoretical Computer Science, ETH Zurich, March 1997) for various proofs of knowledge of discrete logarithms and proofs of the validity of statements about discrete logarithms. For instance,

$$PK \{(\alpha, \beta, \delta) : y = g^{\alpha} h^{\beta} \wedge \tilde{y} = \tilde{g}^{\alpha} \tilde{h}^{\delta} \}$$

denotes a "zero-knowledge Proof of Knowledge of integers $\alpha$, $\beta$, and $\delta$ such that $y = g^{\alpha} h^{\beta}$ and $\tilde{y} = \tilde{g}^{\alpha} \tilde{h}^{\delta}$ holds", where $y, g, h, \tilde{y}, \tilde{g}, \tilde{h}$ are elements of some groups $G = \langle g \rangle = \langle h \rangle$ and $\tilde{G} = \langle \tilde{g} \rangle = \langle \tilde{h} \rangle$ that have the same order. (Note that some elements in the representation of y and $\tilde{y}$ are equal). The convention is that values $\alpha$, $\beta$, and $\delta$ denote quantities of which knowledge is being proven (and are kept secret), while all other values are known to the verifier. For prime order groups which include all groups we consider here, it is well known that there exists a knowledge extractor which can extract these quantities from a successful prover.

Signature Scheme with Efficient Protocols

The signature scheme in the credential system to be described is detailed in "Signature schemes and anonymous credentials from bilinear maps", Camenisch and Lysyanskaya, in Matthew K. Franklin, editor, Advances in Cryptology - CRYPTO 2004, volume 3152 of LNCS, pages 56-72, Springer Verlag, 2004, and has been proven secure under the n-SDH assumption. It assumes a non-degenerate bilinear map $e : G \times G \to G_T$ of prime order q with generators $h, h_0, h_1, ..., h_l, h_{l+1}$. The signer's secret key is $x \in Z_q$ while the public key is $y = h^+$.

A signature on a message $m \in Z_q^*$ is computed by picking c, $s \leftarrow Z_q^*$ and computing $\sigma = \left(h_0 h_1^m h_2^s\right)^{\frac{1}{x+c}}$.

The signature is *(σ, c, s)*. It is verified by checking whether $e\left(\sigma, y h^c\right) = e\left(h_0 h_1^m h_2^s, h\right)$. Multiple messages $m_1, ...,$

$m_l \in Z_q^*$ can be signed as $\sigma = \left(h_0 h_1^{m_1} ... h_l^{m_l} h_{l+1}^s\right)^{\frac{1}{x+c}}$ and verification is done by checking whether

$$e\left(\sigma, y h^c\right) = e\left(h_0 h_1^m ... h_l^{m_l} h_{l+1}^s, h\right).$$

Proving Knowledge of a Signature.

Now assume that we are given a signature (σ, c, s) on messages $m_1, ..., m_l \in Zq$ and want to prove that we indeed possess such a signature. To this end, we need to augment the public key with a value $\tilde{h} \in G$ such that $\log_h \tilde{h}$ are not known.

Knowledge of a signature is proven as follows:

1. Choose random values $r \leftarrow Z_q$ and *open* $\leftarrow Z_q$ and compute a commitment $B = h^r \tilde{h}^{open}$ and a blinded signature $A = \sigma \tilde{h}^r$.
2. Compute the following proof

$$PK \{(c, s, r, open, mult, tmp, m_1, ..., m_l) : B = h^r \tilde{h}^{open} \wedge 1 = B^c h^{-mult} \tilde{h}^{-tmp} \wedge$$

$$\frac{e(h_0, h)}{e(A, y)} = e(A, h)^c \cdot e(\tilde{h}, y)^{-r} \cdot e(\tilde{h}, h)^{-mult} \cdot \prod_{i-1}^{l} e(h_i, h)^{-m_i} \cdot e(h_{l+1}, h)^{-s} \}.$$

We next introduce some fundamentals of dynamic accumulators to assist understanding of the embodiments to be described. An accumulator is dynamic if the computational cost of adding/deleting elements from it is independent of the number of elements that are contained in the accumulator. A secure accumulator consists of algorithms AccGen, AccAdd, AccUpdate, AccWitUpdate, and AccVerify. These algorithms are used by the authority managing the accumulator (the "authority"), a user and a verifier. (In some of the preferred embodiments to be described certain of these algorithms may also be used by an untrusted update entity).

The authority creates an accumulator key pair $(sk_A, pk_A)$, the accumulator $acc_\emptyset$, and a public state $state_\emptyset$ using the AccGen algorithm. It can add a new value $i$ to the accumulator $acc_V$ using the AccAdd algorithm to obtain a new accumulator $acc_{V \cup \{i\}}$ and state $state_{U \cup \{i\}}$, together with a witness $wit_i$. The accumulator for a given set of values $V$ can be computed using the AccUpdate algorithm.

Throughout these operations, $acc_V$ and $wit_i$ are of constant size (independent of the number of accumulated values). The authority does some bookkeeping about the values contained in the accumulator and the status of the accumulator when a witness $wit_i$ was created. These sets are denoted as $V$ and $V_w$ respectively. The bookkeeping information is made public and is only needed for updating witnesses, it is not needed for verifying that a value is contained in an accumulator.

Each time an accumulator changes, the old witnesses become invalid. It is however possible to update all witnesses for values $i \in V$ contained in the accumulator from the bookkeeping information $V_w$. This updating is the most performance intensive operation in existing accumulator systems. The accumulator state $state_U$ also contains bookkeeping information $U$, the set of elements ever added to the accumulator (but not necessarily contained in the current accumulator). This is a superset of $V$ and $V_w$.

After users have obtained an updated witness $wit'_i$ for a value $i$ for the current accumulator, they can prove to any verifier that $i$ is in the accumulator, using the AccVerify algorithm.

AccGen($1^k$, $n$) creates an accumulator key pair $(sk_A, pk_A)$, an empty accumulator $acc_\emptyset$ (for accumulating up to n values) and an initial state $state_\emptyset$.

AccAdd($sk_A$, $i$, $acc_V$, $state_U$) allows the authority to add i to the accumulator. It outputs a new accumulator $acc_{V \cup \{i\}}$ and state $state_{U \cup \{i\}}$, together with a witness $wit_i$ for $i$ .

AccUpdate($pk_A$, V, $state_U$) outputs an accumulator $acc_V$ for values $V \subset U$.

AccWitUpdate($pk_A$, $wit_i$, $V_w$, $acc_V$, V, $state_U$) outputs a witness $wit'_i$ for $acc_V$ if $wit_i$ was a witness for $acc_{V_w}$ and $i \in V$.

AccVerify($pk_A$, $i$, $wit_i$, $acc_V$) verifies that $v \in V$ using an up-to-date witness $wit_i$ and the accumulator $acc_V$. In that case the algorithm accepts, otherwise it rejects.

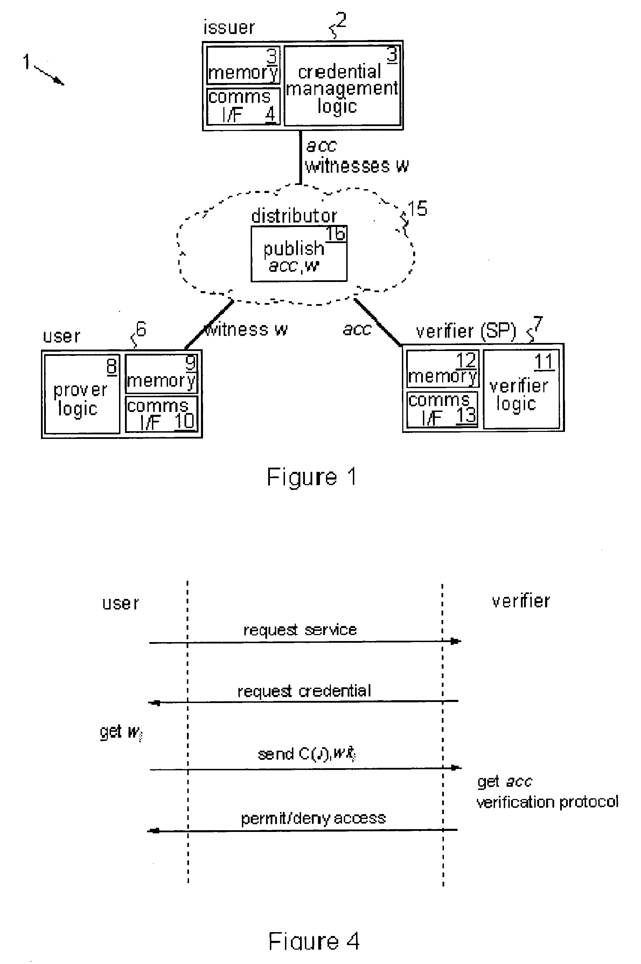

Figure 1 of the drawings is a simplified schematic of a first data processing system embodying the invention showing the main components involved in operation of the system. The data processing system 1 includes a data item management computer 2 operated by the authority responsible for managing data items, here cryptographic credentials, and for managing a cryptographic accumulator for use in the credential verification process to be described. In particular, this authority (here the "issuer") issues cryptographic credentials to users and indicates valid credentials in the system via the accumulator to be described. The issuer computer 2 includes credential management logic 3 for implementing processes detailed below, memory 4 and a communications interface 5. The system 1 also includes a user computer 6 for using cryptographic credentials obtained from issuer computer 2, and a verifier computer 7 for verifying user credentials by reference to the accumulator to be described. User computer 6 includes prover logic 8 for implementing cryptographic processes described below, memory 7 and a communications interface 8. Verifier computer 3 includes verifier logic 11 for performing a cryptographic verification process described below, memory 12 and a communications interface 13. Computers 2, 6 and 7 can communicate over a data communications network 15 via their respective communications interfaces (where network 15 may in practice comprise a plurality of component networks and/or internetworks). In addition, the system 1 includes a distributor computer 16, shown here in network 15 and accessible to all computers 2, 6, 7, the purpose of which is explained below.

The control logic 3, 8, 11 of the issuer, user and verifier computers is configured for implementing the appropriate steps of the cryptographic processes described below. In general, this control logic may be implemented in hardware or software or a combination thereof, and the precise form of the user, verifier and issuer devices 2, 6, 7 is largely irrelevant to fundamental operation of the system to be described. In this example, however, we assume that these devices are implemented by general-purpose computers, user computer 6 being a user pc and issuer and verifier computers 2, 7 being servers to which user pc 2 can connect over network 15. Credential management logic 3, prover logic 8 and verifier logic 11 are implemented here by respective computer programs which configure the host computers to perform the functions described. Suitable software will be apparent to those skilled in the art from the description herein. Note however that the functionality of computers 2, 6, 7 and 16 may in general be implemented by one or more component devices. For example, the functionality of user computer 6 might be distributed in practice between a general purpose computer providing a communications interface to network 15, and a separate user device such as a smart card. Such a separate device may provide secure storage for credentials and cryptographic software, and may be connected via wired or wireless links to the user computer when required.

In this illustrative example, the system 1 is employed in an access control scenario. Verifier computer 7 is operated by a service provider (SP). A user operating user computer 6 can connect over network 15 to SP computer 7 to request access to a restricted service. To gain access to the service, the user must demonstrate possession of a cryptographic credential obtained from issuer 2. SP computer 7 must verify that the presented credential is valid. This involves confirming that the credential is one of a set of valid credentials maintained by issuer 2. This is achieved using a cryptographic accumulator construction. We first consider operation of the accumulator-based system in a situation where user privacy is not an overriding concern. That is, the user needs to prove possession of a valid credential but is not concerned about other, possibly identity-revealing information made available by this process. Algorithms underlying this initial accumulator construction will be defined in the following and are based in part on the broadcast encryption scheme by Boneh, Gentry and Waters (see "Collusion Resistant Broadcast Encryption with Short Ciphertexts and Private Keys", Boneh, Gentry and Waters, Advances in Cryptology - CRYPTO 2005, volume 3621 of Lecture Notes in Computer Science, pages 258-275, Springer, 2005). In particular, accumulator computation in the construction to be described is related to the way in which encryption keys are generated in the referenced scheme, and witness computation is related to the way in which decryption keys are generated in the referenced scheme.

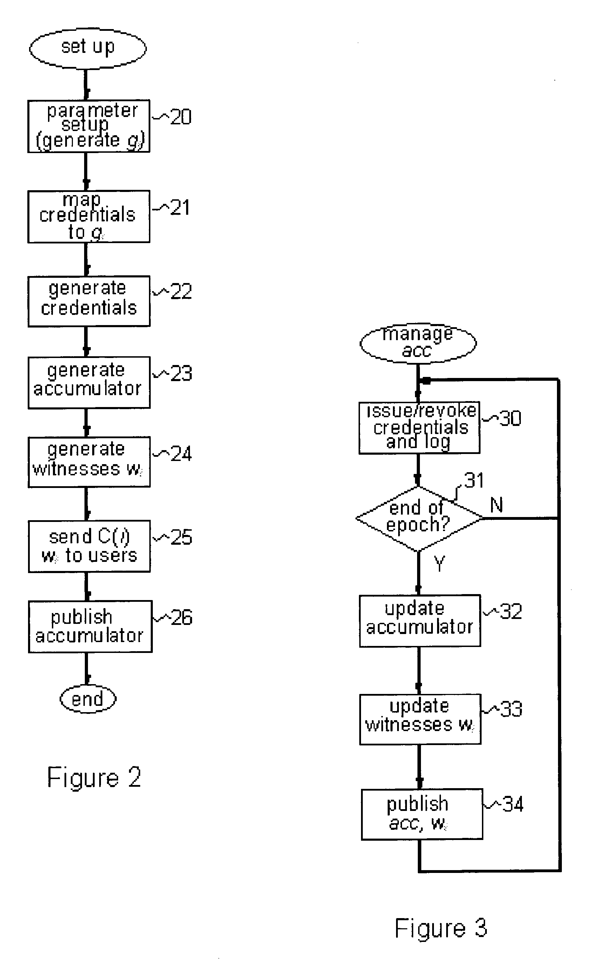

We consider first a preliminary stage in operation of the system where credentials are first to be issued to users by issuer computer 2. Key steps in operation of issuer computer 2 are indicated in the flow diagram of Figure 2. (Note that, in general, issue of credentials could be performed off-line (e.g. supplied on smart cards issued to users) and/or credentials could be issued on-line via network 15 following successful application by users. Figure 2 represents a simplification of the issuing process but the relevant operating principles can be understood from this figure). The set up process commences with step 20 in which credential management logic 3 generates various parameters to be used in operation of the accumulator. This parameter setup process is defined by the following algorithm implemented by logic 3: AccGen($1^k$, $n$): Run BMGen($1^k$) to obtain the setup $params_{BM}$ = $(q, G, G_T e, g)$ of a bilinear map $e: G \times G \rightarrow G_T$.

Pick a random value $\gamma \in Z_q$. Generate a key pair $sk$ and $pk$ for a secure signature scheme, for instance the BB signature scheme discussed above that is secure under the SDH assumption.

Let $pk_A$ = ($params_{BM}$, $pk$, $z = e(g, g)^{\gamma^{n+1}}$), $sk_A$ = ($params_{BM}$, $\gamma$, $sk$), $acc_\emptyset$ = 1 and $state_\emptyset$ = ($\emptyset$,

$$g_1 = g^{\gamma^1}, ..., g_n = g^{\gamma^n}, g_{n+2} = g^{\gamma^{n+2}}, ..., g_{2n} = g^{\gamma^{2n}}).$$

In this process, credential management logic 3 uses the secret value $\gamma$ and a group generator g to generate the group elements $g_1 = g^{\gamma^1}, g_2 = g^{\gamma^2}, g_3 \doteq g^{\gamma^3}, ..., g_n = g^{\gamma^n}$, where n is a predefined maximum number of credentials to be "contained in" the accumulator, i.e. in the set of valid credentials. These are the group elements which will be mapped to credentials as explained below. In addition, logic 3 generates the auxiliary group elements

$g_{n+2} = g^{\gamma^{n+2}}, g_{n+3} = g^{\gamma^{n+3}}, g_{n+4} = g^{\gamma^{n+4}}, ..., g_{2n} = g^{\gamma^{2n}}$ which will be used for witness calculation as described below.

Next, in step 21 of Figure 2, logic 3 defines the mapping between group elements and the credentials to be issued. Each credential has an identifier in the form of serial number which is defined in the credential, and the mapping is defined between these serial numbers and respective group elements. For simplicity here we represent the serial numbers by the set of integers 1 to n, though of course any arbitrary mapping of numbers to group elements can be accommodated. Hence, for each credential with a serial number i ∈ {1, 2, 3, ..., $n$}, the credential is mapped to the group element $g_i = g^{\gamma^i}$ here.

Step 22 represents generation by logic 3 of the initial set of credentials C($i$) to be issued to users. These are the credentials that will be initially contained in the accumulator. Credentials can be generated in known manner, each credential including the respective serial number i. Next, in step 23, logic 3 generates the accumulator for the initial set of credentials in accordance with the following algorithm:

AccUpdate($pk_A$, V, $state_U$): Check whether V c U and output $\perp$ otherwise. The algorithm outputs $acc_V$ = $\Pi_{i \in V} g_{n+1-i}$.

Thus, the cryptographic accumulator is generated here as the product of the group elements $g_{n+1-i}$ for values of $i$ for which the group element $g_i$ is mapped to a credential in the set of valid credentials. The group elements actually accumulated are thus related via the $i$-values to the elements $g_i$ mapped to valid credentials.

In step 24 of Figure 2, credential logic 3 generates a witness for each credential C in the accumulator by computing:

$$w = \prod_{\substack{j \in V \\ j \neq i}} g_{n+1-j+i}$$

and a signature $\sigma_{\bar{i}}$ on $g_i || i$ under signing key $sk$.

Thus, for each credential $i$, the accumulator witness w is calculated as the product of a respective different subset of the group elements. This subset is dependent on the $i$-values of credentials in the valid set and also the $i$-value of the credential for which each witness is generated. Specifically, for each valid credential mapped to a group element $g_i$, the witness comprises the product of the group elements $g_{n+1-j+i}$ for all values of $j$ for which a group element $g_j$ is mapped to another valid credential. Thus, the witness generation makes use of the auxiliary group elements $g_{n+2}$, ..., $g_{2n}$ defined earlier. The signature $\sigma_i$ indicates the mapping between the associated credential and the corresponding group element. The witness is output as $wit_i = (w, \sigma_i, g_i)$.

In step 25, each credential C($i$), together with its associated witness $wit_i$, is sent via network 15 to the user in question. Next, in step 26, credential logic 3 publishes the cryptographic accumulator by sending the accumulator calculated in step 23 to distributor computer(s) 16. Distributor 16 publishes the accumulator on network 15 by providing access to any connecting computer 6, 7. The initial stages of accumulator setup are then complete.

Assuming that new credentials might be issued and old credentials revoked by issuer 2, credential logic 3 must manage the accumulator to reflect changes in the dynamic set of valid credentials. This accumulator management process is represented in the simplified flow diagram of Figure 3. Step 30 represents the issue and revocation of credentials which occurs within a defined "epoch". Each time a credential is issued or revoked, credential logic 3 logs this fact along with the serial number $i$ in memory 4. While the ensuing update process could in principle be performed each time a credential is issued or revoked, the update is typically performed periodically at regular intervals, for example daily. Hence, in decision step 31 credential logic 3 checks whether the current epoch has ended, and if not operation reverts to step 30. At the end of each epoch, however, operation proceeds to step 32 where logic 3 updates the accumulator to account for each credential added/removed from the set of valid credentials. In step 33 the set of witnesses is then updated by generating witnesses for newly issued credentials and updating the old witnesses for existing credentials to reflect changes in the valid set. For each newly issued credential, these processes are defined by the following algorithm:

AccAdd($sk_A$, $i$, $acc_V$, $state_U$): Compute $w = \prod_{\substack{j \in V \\ j \neq i}}^{j \neq i} g_{n+1-j+i}$ and a signature $\sigma_i$ on $g_i \| i$ under signing key $sk$. The algorithm outputs $wit_i = (w, \sigma_i, g_i)$, an updated accumulator value $acc_{V \cup \{i\}} = acc_V \cdot g_{n+1-i}$, and state $state_{U \cup \{i\}} = (UU \{i\}, g_1, ..., g_n, g_{n+2}, ..., g_{2n})$.

It can be seen that addition of a credential i to the accumulator is achieved simply by multiplying the previous $acc$ value by the group element $g_{n+1-i}$. Similarly, revocation of a credential $i$ is achieved simply by dividing the previous $acc$ value by the group element $g_{n+1-i}$. Accumulator updates are thus fast and efficient, complexity being linear in the number of credentials added/revoked. The witness generation for newly added credentials is the same as that in Figure 2 above. The updating of existing witnesses is defined by:

AccWitUpdate($pk_A$, $wit_i$, $Vw$, $acc_V$, $V$, $state_U$): Parse $wit_i$ as (w, $\sigma_i$, $g_i$). If $i \in V$ and $V \cup V_w \subset U$, compute

$$w' = w \frac{\prod_{j \in V \setminus V_w} g_{n+1-j+i}}{\prod_{j \in V_w \setminus V} g_{n+1-j+i}}$$

Output the updated witness wit'$_i$ as ($w'$, $\sigma_i$, $g_i$). Otherwise output $\perp$.

It can be seen that updating a witness to accommodate addition (or revocation) of a given credential simply requires multiplication (or division) of the old witness value by the appropriate group element $g_{n+1-j+i}$. Since this can be achieved with a single multiplication, witness updates are again both fast an efficient, complexity being linear in the number of changes per witness.

Returning to Figure 3, in step 34 credential logic 3 of issuer computer 2 sends the updated accumulator and witnesses to distributor computer(s) 16 for publication on network 15. Witnesses are published with some form of identifying tag to enable individual users to identify the witness for their particular credential when required. Operation then reverts to step 30 for the new epoch.

Figure 4 illustrates the procedure when a user subsequently wishes to use his credential to access an on-line service via verifier computer 7. This figure indicates the key steps performed by user computer 6 on the left of the figure and verifier computer 7 on the right. Operation begins when user computer 6 connects to verifier computer 7 to request access to the service. Verifier logic 11 of computer 7 responds by requesting the user's credential. This request is received by prover logic 8 of user computer 6. The prover logic then establishes a connection to distributor computer 16 to download the current value of the witness w for the credential C($i$) previously obtained from issuer 2 and stored in memory 9. This step is necessary to account for any changes in the accumulator since the credential was issued in accordance with steps 32 to 34 of Figure 3. The updated witness w is stored in memory 9. Next, prover logic 8 sends the credential C($i$), containing the serial number $i$ as discussed earlier, together with the full witness $wit_i$ $(w, \sigma_i, g_i)$ defined above, to verifier 7. Verifier logic 11 then similarly accesses distributor computer 16 to download the current value of the accumulator $acc_V$ which is then stored in memory 12. Next, verifier logic 11 runs the following verification protocol:

AccVerify($pk_A$, i, $wit_i$, $acc_V$): Parse $wit_i$ = $(w, \sigma_i, g_i)$. Output accept, if $\sigma_i$ is a valid signature on $g_i\| i$ under verification

key $pk$ and $\dfrac{e(g_i, acc_V)}{e(g, w)} = z$ . Otherwise output reject.

In this process, verifier logic 11 checks that the signature $\sigma_i$ is valid for the serial number i of the user's credential C($i$) and the associated group element $g_i$. (Note that the use of this signature scheme to sign the $g_i$ together with the value to which they map avoids the need to publish the mapping of the $g_i$ values, thus avoiding large public parameters during verification). Verifier logic 11 also checks that the witness w confirms the group element $g_i$ is in the current accumulator $acc_V$. This confirms that the user's credential is valid. Verifier logic 11 then permits or denies user computer 6 access to the service according to whether or not the credential is deemed valid.

Note that, while the retrieval of current witness and accumulator values is shown integrated in the access process in Figure 4, in practice each party can simply retrieve the new values periodically at the start of each new epoch.

It will be seen that the above provides a highly-efficient credential verification system based on a dynamic accumulator construction with fast and efficient calculation and updates of the accumulator and witnesses. Witness updates for example require only multiplications (no exponentiations) linear in the number of changes to the accumulator and do not require knowledge of any secret information. In general, therefore, witnesses could be kept up-to-date for the users either by the users themselves, by the issuer, or by some third party. However, while witness updates could be performed individually by users as in prior schemes, the preferred embodiments exploit the efficiency of the system, which enables all witnesses to be feasibly kept in main memory, to allow witness calculation to be performed centrally. This is done by issuer 2 in the above embodiment. As an alternative, since it is possible to update all witnesses for values $i \in V$ contained in the accumulator from the bookkeeping information $V_w$ without knowledge of any secret key, witness updates can be efficiently offloaded to an untrusted update entity who runs AccWitUpdate and is only given the accumulator state $state_U$ and the bookkeeping information $V$ and $V_w$. For example, the distributor computer 16 in Figure 1 could additionally function as a witness update computer. On updating of the accumulator by issuer computer 2 following a change in the valid set, witness updates for credentials remaining in the set could be performed, altogether or in batches, by one or more such distributor computers 16.

The fundamental scheme described above is sufficiently efficient to provide the basis for operation in a fully anonymous credential revocation system. The following discusses various modifications to the basic system above for implementing a particularly preferred embodiment of an anonymous credential revocation system.

Efficient Proof That a Hidden Value was Accumulated

We consider first an efficient protocol enabling a user to prove that she possesses a value contained in the current accumulator without revealing which value she possesses (or which index i is assigned to her). In this section, we give an efficient protocol that achieves this for our accumulator construction. In the foregoing embodiment, the group elements g$_1$, ..., g$_n$ are authenticated by having each one signed, the user then providing the $g_i$ and the signature to the verifier as described. Here we require the prover to prove that she knows a signature by the accumulator issuer on "her" $g_i$ without revealing either the signature or the $g_i$ value. Such a proof needs to be efficient and requires a special signature scheme. As accumulated values are only proven and never revealed we can do without signing i along with $g_i$. This allows for a more efficient signature scheme and proof system.

Prerequisites. We instantiate the signature scheme used for signing the $g_i$ by picking a fresh $u \leftarrow$ G, secret key $sk \leftarrow Z_q$

and public key $pk = g^{sk}$. A signature consists of the two elements $\sigma_i = g^{1/(sk + \gamma^i)}$ and $u^i = u^{\gamma^i}$ and is verified by checking that $e(p^k \cdot g_i, \sigma_i) = e(g,g)$.

Let $pk_A$ = $(params_{BM}, pk, z = e(g,g)^{\gamma^{n+1}})$, $sk_A$ = $(params_{BM}, \gamma, sk)$, and $state_U$ = $(\emptyset, g_1 = g^{\gamma^1},$

$$g_n = g^{\gamma^n}, \; g_{n+2} = g^{\gamma^{n+2}}, \; ..., \; g_{2n} = g^{\gamma^{2n}})$$ be as generated by the accumulator operations already described. We also pick an additional $\tilde{h} \leftarrow G$ for commitments. The discrete logarithm of $h$ and $u$ with respect to $g$ should be unknown to the prover.

<u>Proof of Knowledge.</u> For arbitrary $V \subset \{1, ..., n\}$ and $i \in V$, on input $acc_V = \Pi_{i \in V} g_{n+1-i}$ and the corresponding witness $wit_i$

$= (w, \sigma_i, u_i, g_i), \; \mathrm{W} = \prod_{j \in V}^{j \neq i} g_{n+1-j+i}$, for value $i$, the prover performs the following randomization:

Pick at random $r, r', r'', r''', open \in Z_q$ and computing $G' = g_i \tilde{h}^r$, $W' = w \tilde{h}^{r'}$, $D' = g^r \tilde{h}^{open}$, $S' = \sigma_i \tilde{h}^{r''}$, and $U' = u_i \tilde{h}^{r'''}$ respectively. Then the prover, proves

$$PK\{(r, r', r'', r''', open, mult, tmp,) : \frac{e(G', acc_V)}{e(g, W')z} = e(\tilde{h}, acc_V)^r \, e(1/g, \tilde{h})^{r'} \wedge$$

$$D' = g^r \tilde{h}^{open} \wedge 1 = D'^{r''} g^{-mult} \tilde{h}^{-tmp} \wedge$$

$$\frac{e(pk \cdot G', S')}{e(g, g)} = e(pk \cdot G', \tilde{h})^{r''} e(\tilde{h}, \tilde{h})^{-mult} e(\tilde{h}, S')^r \} \wedge$$

$$\frac{e(G', u)}{e(g, U')} = e(\tilde{h}, u)^r \, e(1/g, \tilde{h})^{r'''} \}.$$

Under the n-DHE and the n-HSDHE assumptions the protocol above is a proof of knowledge of a randomization value $r$ that allows to de-randomize $G'$ to a value $g_i$, where $i$ is accumulated in $acc_V$, i.e. $i \in V$.

In anonymous credential schemes (e.g. anonymous e-cash, group signatures, anonymous certificate systems, pseudonym systems, etc.) users get some form of credential which can be used in an anonymity protecting way. In "A cryptographic framework for the controlled release of certified data", Bangerter et al., in Christianson et al, editors, Security Protocols Workshop, volume 3957 of Lecture Notes in Computer Science, pages 20-42,Springer, 2004, the authors give a cryptographic framework for the controlled release of information certified in a credential. This employs special signature protocols, called Camenisch-Lysyanskaya (CL) signatures, for issuing private certificates to users (see "A signature scheme with efficient protocols", Jan Camenisch and Anna Lysyanskaya, I Cimato et al., editors, Security in Communication Networks, Third International Conference, SCN 2002, volume 2576 of LNCS, pages 268-289, Springer Verlag, 2003). A private credential *(cert)* consists of attributes and a signature over the attributes much like a traditional certificate, only that a more powerful signature scheme is used:

$$cert = (\sigma, m_1, ..., m_l) \text{ with } \sigma = \text{Sign}(m_1, ..., m_l; sk_I)$$

Let $(sk_I, pk_I) \leftarrow$ IssuerKeygen($1^k$) be the certificate issuer's keypair. The framework supports two types of protocols: 1) an interactive certificate issuing protocol ObtainCert that allows a signature on committed values to be obtained without revealing these values and 2) efficient zero-knowledge proofs of knowledge of signature possession.
Let $(m_1, ..., m_l)$ denote a list of data items and $H \subset L = \{1, ..., l\}$ a subset of data items. Using the first protocol, a user can obtain a certificate on $(m_1, ..., m_l)$ such that the issuer does not learn any information on the data items in $H$, while it learns the other data items, i.e. $L \setminus H$.
The private certificates of a user remain private to the user, that is, they are never released (as a whole) to any other party: when using (showing) certificates for asserting attribute information, the user proves that she knows (has) certificates with certain properties. The user may release certain attributes, while only proving the knowledge of the rest of the certificate:

$$PK\{(\sigma, m_1, ..., m_{l'}) : 1 = \text{VerifySign}(\sigma, m_1, ..., m_{l'}, m_{l'+1}, ..., m_l; pk_I) \wedge ...\}$$

In the above proof only the attribute values of $m_{l'+1}$ to $m_1$ are revealed.

We extend the above framework as follows. Let $V$ be the set of valid certificates for an epoch with epoch information $epoch_V$. As before, a certificate is assigned a unique identifier i (embedded into it as one of the attributes) and a witness $wit_i$. We require that the user can prove to a verifier that she possesses a non-revoked certificate only if $i \in V$. This is achieved by having the user prove that the identifier embedded into her credential is a valid one for the current epoch. Thus, before engaging in a proof, the user needs to update her witness and both parties (the user and the verifier) need to obtain the most up-to-date epoch information $epoch_V$ for $V$. The preferred credential revocation system is based on updated IssuerKeygen and ObtainCert protocols, new algorithms UpdateEpoch and UpdateWitness for managing revocation, and a zero-knowledge proof system for a new predicate VerifyEpoch that allows proof of possession of a witness $wit_i$:

IssuerKeygen($1^k$; n) creates the issuer key pair $(sk_I, pk_I)$, epoch information $epoch_\emptyset$, and $state_\emptyset$ for issuing up to n certificates.

ObtainCert(U($pk_I$, H, $\{m_j\}_{j \in H}$); I($sk_I$, H, $\{m_j\}_{j \in L \backslash H}$, $epoch_V$, $state_U$)) allows a user to obtain \a private certificate $cert_i$ from the issuer. The issuer computes and publishes the user's witness $wit_i$, and updated epoch information $epoch_{V \cup \{i\}}$ and $state_{U \cup \{i\}}$.

UpdateEpoch($V$, $state_U$) outputs epoch information $epoch_V$, if $V$ c $U$. Otherwise it outputs $\perp$.

UpdateWitness($wit_i$, epoch v, $state_U$) outputs an updated witness $wit'_i$ if $V$ c $U$. Otherwise it outputs $\perp$.

A user who knows a certificate $cert_i$ and a corresponding up-to-date witness $wit_i$ can prove to a verifier possession of the certificate and its validity for the current epoch using the new predicate VerifyEpoch as follows. The user's secret input is $cert_i$. The common input of the protocol is the issuer's public *key $pk_I$*, the epoch information $epoch_V$, and a specification of the proof statement (this includes the information revealed about the certificate). In the example below the user chooses to keep the first $l'$ messages secret while revealing the rest of the messages.

$$PK\{(\sigma, m_1, \ldots, m_{l'}, i, wit_i) : 1 = VerifySign(\sigma, m_1, \ldots, m_{l'}, m_{l'+1}, \ldots, m_l, i; pk_I) \wedge$$
$$1 = VerifyEpoch(i, wit_i ; epoch_V, pk_I)\}$$

<u>Signature Scheme.</u> In the following embodiment, the mapping of $i$ to $g_i$ is made implicit by including $g_i$ in the credential to make the proofs more efficient. Thus, the $g_i$ values are used both in the private certificate and the accumulator to represent the certificate id $i$. This requires that we extend the signature scheme given earlier to allow verification without knowing the secret exponent $\gamma^i$:

1. The signer creates g, $h$, $h_0$, $h_1$, ..., $h_l$, $h_{l+1} \leftarrow$ G and creates keys $x \in Z_q$ and $y = h^x$.

2. Next, the signer publishes a list $(g_1 = g^\gamma, \ldots, g_n = g^{\gamma^n},)$ that he allows in signatures.

3. The signer picks c, $s \leftarrow Z^*_q$ and computes the signature as $(\sigma = \left(h_0 h_1^{m_1} \ldots h_l^{m_l} g_i h_{l+1}^s\right)^{\frac{1}{x+c}}, c)$.

4. A signature $(\sigma, c, s)$ on messages $m_1, \ldots, m_l, \hat{g}_i$ is verified by checking that $\hat{g}_i$ is in the list of $g_i$ values and checking

that $e(\sigma, yh^c) = e(h_0(\prod_{j=1}^l h_j^{m_j})\hat{g}_i h_{l+1}^s, h)$.

(The check that $\hat{g}_i$ is in the list of $g_i$ values in the last step here will later be replaced by a signature/authenticator on $g_i$ as in the earlier embodiment).

In the modified construction, the set up process performed by credential management logic 3 of issuer computer 2 (corresponding to step 20 of Figure 2) is defined by: IssuerKeygen($1^k$, n). Run BMGen($1^k$) to generate the parameters $params_{BM} = (q, G, G_T, e, g)$ of a (symmetric) bilinear map e : $G \times G \rightarrow G_T$. Pick additional bases $h$, $h_0$, $h_1$, ..., $h_l$, $h_{l+1}$, $\tilde{h}$,

$u \leftarrow$ G and $x, sk, \gamma \leftarrow Z_q$ and compute $y = h^x$ and $pk = g^{sk}$. (The discrete logarithms of g, h, $\tilde{h}$ and $u$ with respect to each other are mutually unknown). Compute $g_1, ..., g_n, g_{n+2}, ..., g_{2n}$, where $g_i = g^{\gamma^i}$, and $z = e(g,g)^{\gamma^{n+1}}$.

Output $(sk_I, pk_I) = ((params_{BM}, x, sk, \gamma), (params_{BM}, \gamma, h, ho, ..., h_{l+1}, \tilde{h}, u, pk, z))$, $epoch_\emptyset = (acc_\emptyset = 1, \emptyset)$, and $state_\emptyset = (\emptyset, g_1, ..., g_n, g_{n+2}, ..., g_{2n})$.

The issue of user certificates and witnesses (corresponding to steps 22, 24 and 25 of Figure 2) is defined in the following:

ObtainCert(U($pk_I, H, \{m_j\}_{j \in H}$), I($sk_I, H, \{m_j\}_{j \in L\backslash H}, epoch_v, state_U$)). The user (prover logic 8 of user computer 6) runs the following protocol to obtain a certificate $cert_i$ from the issuer:

1. The user chooses a random $s' \in Z^*_q$, computes $X = \prod_{j \in H} h_j^{m_j} h_{l+1}^{s'}$ and sends X to the issuer.

2. The user (as prover) engages the issuer (as verifier here) in the following proof

$$PK\{(\{m_j\}_{j \in H}, s') : X = \prod_{j \in H} h_j^{m_j} h_{l+1}^{s'}\},$$

which will convince the issuer that X is correctly formed.

3. The issuer parses $epoch_v$ as ($acc_V, V$) and $state_U$ as ($U, g_1, ..., g_n, g_{n+2}, ..., g_{2n}$). He then computes

$$epoch_{V \cup \{i\}} = (acc_V \cdot g_{n+1-i}, V \cup \{i\}) \text{ and } state_{U \cup \{i\}} = (U \cup \{i\}, g_1, ..., g_n, g_{n+2}, ..., g_{2n}).$$

4. The issuer chooses a random c, $s'' \in Z^*_q$, and computes $\sigma = ((\prod_{j \in L\backslash H} h_j^{m_j}) X g_i h_{l+1}^{s''})^{1/(x+c)}$.

5. The issuer computes $w = \prod_{j \in V}^{j \neq i} g_{n+1-j+i}$, $\sigma_i = g^{1/(sk+\gamma^i)}$, and $u_i = u^{\gamma^i}$ and sets $wit_i = (\sigma_i, u_i, g_i,$ and and $w, V \cup \{i\})$.

6. The issuer sends ($\sigma, c, s'', \{m_j\}_{j \in L\backslash H}, g_i, i$) to the user and outputs $wit_i, epoch_{V \cup \{i\}}$ and $state_{U \cup \{i\}}$.

7. The user verifies the certificate obtained and outputs $cert_i = (\sigma, c, m_1, ..., m_l, g_i, s = s' + s'', i)$.

The algorithm corresponding to step 23 of Figure 2 is given by:

UpdateEpoch($V, state_U$): check whether $V \subset U$ and output $\perp$ otherwise. The algorithm creates $epoch_V$ for proving possession of $cert_i, i \in V$. Let $acc_V = \Pi_{i \in V} g_{n+1-i}$, output $epoch_V = (acc_V, V)$.

The updating of old witnesses corresponding to step 33 of Figure 3 is defined by: UpdateWitness ($wit_i, epoch_V,$ $state_U$): aborts with $\perp$ if $V \not\subset U$. Otherwise it parses $wit_i$ as ($\sigma_i, u_i, g_i, w, V_w$). $w' = w \dfrac{\prod_{j \in V \backslash V_w} g_{n+1-j+i}}{\prod_{j \in V_w \backslash V} g_{n+1-j+i}}$. The algorithm outputs

$wit'_i$ as ($\sigma_i, u_i, g_i, w', V$). $g_i, w, g_{n+1-j+i}$ The

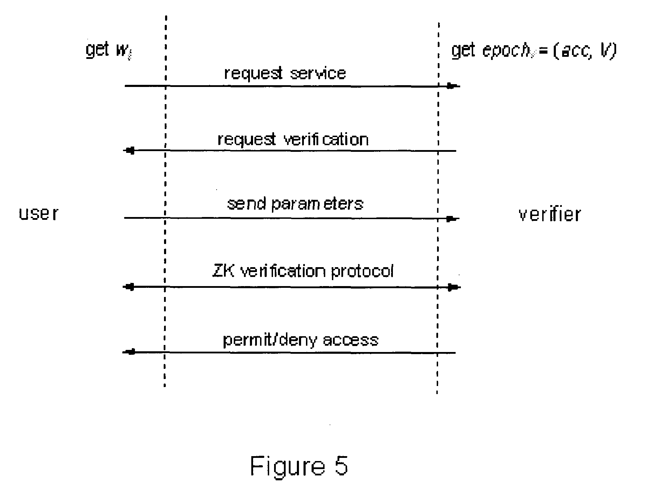

Figure 5 illustrates the interaction between user computer 6 and verifier computer 7 in this embodiment when a user subsequently wishes to use his anonymous credential $cred_i = (\sigma, c, m_1, ..., m_l, g_i, s, i)$, with associated witness $wit_i = (\sigma_i, g_i, u_i, w, V_w)$. At the start of each new epoch, each party 6, 7 downloads updated values from distributor computer 16 to account for intervening changes in the accumulator. Specifically, prover logic 8 obtains the current witness value $w_i$ for the user's credential $cred_i$, and verifier logic 11 obtains the currently-published $epoch_V = (acc_V, V)$ containing the current accumulator value. Subsequently, in response to the user's access request, verifier logic 11 sends a verification request to prover logic 6. Next, prover logic defines various parameters to be used in the ensuing proof.

Specifically, prover logic picks p, $\rho', r, r', r''', r'''' \leftarrow Z_q$ and picks opening *open, open'* $\leftarrow Z_q$ *to* commit to p and r respectively.

Prover logic then computes commitments $C = h^\rho \widetilde{h}^{open}, C' = g^r \widetilde{h}^{open'}$ and blinded values

$A = \sigma \widetilde{h}^\rho$, $G' = g_i \widetilde{h}^r$, $W' = w \widetilde{h}^{r'}$, $S' = \sigma_i \widetilde{h}^{r''}$, and $U' = u_i \widetilde{h}^{r'''}$. The prover logic then sends C, *C', A, G', W',*

*S'* and *U'* to the verifier. The prover logic 8 and verifier logic 11 then communicate to implement a zero-knowledge (ZK) verification protocol. The common input of the protocol is the issuer's public key $pk_I$, the epoch information $epoch_v$, and a specification of the proof statement (this includes the information revealed about the certificate). In the example below the user chooses to keep the first *l* messages secret while he reveals the rest of the messages:

$PK \{(c, p, open, mult, tmp, m_1, ..., m_{l'}, s, r, open', mult', tmp', r', r'', r''',)$:

$$C = h^\rho \widetilde{h}^{open} \wedge 1 = C^c h^{-mult} \widetilde{h}^{-tmp} \wedge$$

$$\frac{e(h_0 \cdot \prod_{j=l'+1}^{l} h_j^{m_j} \cdot G', h)}{e(A, y)} = e(A, h)^c \cdot e(\widetilde{h}, h)^r$$

$$\cdot e(\widetilde{h}, y)^{-\rho} \cdot e(\widetilde{h}, h)^{-mult} \cdot \prod_{j=1}^{l'} e(h_j, h)^{-m_j} \cdot e(h_{l+1}, h)^{-s} \wedge$$

$$\frac{e(G', acc_V)}{e(g, W')z} = e(\widetilde{h}, acc_V)^r e(1/g, \widetilde{h})^{r'} \wedge$$

$$C' = g^r \widetilde{h}^{open'} \wedge 1 = | C'^c g^{-mult'} \widetilde{h}^{-tmp'} \wedge$$

$$\frac{e(pk \cdot G', S')}{e(g, g)} = e(pk \cdot G', \widetilde{h})^{r''} e(\widetilde{h}, \widetilde{h})^{-mult'} e(\widetilde{h}, S')^r \wedge$$

$$\frac{e(G', u)}{e(g, U')} = e(\widetilde{h}, u)^r e(1/g, \widetilde{h})^{r'''} \}.$$

Under the n-HSDHE and the n-DHE assumptions, the protocol above is a proof of knowledge of an adapted signature on $(m_1, ..., m_l, g_i)$ such that $i \in V$.

The above process allows the user to prove possession of a valid credential without revealing any other information to the verifier, maintaining full anonymity and transaction unlinkability. Unlike previous proposals which require expensive computations, the system described is computationally efficient, providing, inter alia, highly efficient witness updates. In revocation systems with a large number of users (such as the electronic token based systems which are envisaged with the introduction of e-ID's, e-tickets and the like) the number of revocations per epoch is likely to be very large. Resource-constrained user devices will typically be unable to handle the computation required to accommodate such changes. With the above system, however, it is computationally feasible for updates to be handled by a single authority (which may or may not be the issuer), thereby allowing adoption of dynamic accumulators for revocation in privacy-preserving systems with large numbers of users. There could even be several witness update entities, responsible for upgrading witnesses for group of users. For example, in a national e-ID's systems, witness updates could be performed by per-county or per-city. This requires only public parameters and update authorities are only responsible for correct computation of the witness updates for users in their group. Malicious behaviour by one of the witness update entities does not break system security (since they need only public parameters) but may simply lead to denial of service. That is, if a witness is not correctly computed (not reflecting the latest changes in the accumulator) it would prevent a user proving validity of her credential. In this case, users can report to the issuing authority to obtain a valid witness update and signal the misbehaviour of the witness update entity. Compared to prior systems, the user thus needs to do far less computations, and the update authority needs to do less computation by an order of magnitude. By shifting the burden of computational complexity away from users to more powerful parties such as the issuing authority, efficient certificate revocation status checks can even be conducted in mobile scenarios where users engage in transactions with verifiers using devices such as mobile phones or smart cards.

It will of course be appreciated that many changes can be made to exemplary embodiments described above. For example, publication of accumulators etc could be performed by issuer 2 rather than independent distributor 16, and components represented by single computers in the embodiments described may be implemented in practice by more than one computer of a distributed computing system. In addition, embodiments of the invention can of course be applied to data items other than cryptographic credentials. An additional modification for further improving efficiency is explained below.

In the foregoing construction, the AccGen algorithm defines $state_U=(U, g_1, ..., g_n, g_{n+2}, ..., g_{2n})$ where $U$ is book-keeping information that keeps track of all elements that were ever added to the accumulator (but might have been subsequently removed). The rest of the state is static. A modification that reduces the size of $state_U$ will now be described. The size of the public parameters in the foregoing construction is linear in the estimated upper bound on the number of values that may need to be accumulated. In scenarios where this upper bound is hard to estimate, over-estimation could be a costly issue. However, in the special case where at a given point in time we never accumulate values greater than $\tilde{n} \leq n$ we can bring this cost down to $O(\tilde{n})$. We achieve this through lazy evaluation of the accumulator parameters. Let $\tilde{n}$ be the greatest accumulated value. For a value $i \in V$ we need (1) the value $g_{n+1-i}$ to add $i$ to the accumulator, (2) the value $g_i$ to verify membership in the accumulator, and (3) values $g_{n+1-j+i}$ for $j \in V\backslash V_w)\cup (V_w\backslash V)$ to compute and update witnesses. Note that for all $j \in V\cup V_w$, $j$ is smaller than $\tilde{n}$. We claim that the values $\left\{g_i, g_{n+1-i}, g_{n+1}\right\}_{i=1}^{\tilde{n}} \} \setminus \left\{g_{n+1}\right\}$ are sufficient for all of these operations. Obviously the first two requirements are met. Moreover, if $j > i$, then $g_{n+1-j+i} \in \left\{g_{n+1-i}\right\}_{i=1}^{\tilde{n}}$. Otherwise, $1 \leq j < i$ and $g_{n+1-j+i} \in \left\{g_{n+1}\right\}_{i=1}^{\tilde{n}}$. This establishes the third requirement. In the ObtainCert protocol of the above revocation scheme $\tilde{n}$ is increased by one and the missing accumulator parameters are added to $state_U$. Note that $U=\{1, ..., \tilde{n}\}$. The updated state is then used to update the epoch information $epoch_V$ and the witnesses $wit_i$. Many other changes and modifications can be made to the embodiments described without departing from the scope of the invention.

**Claims**

1. A method for providing a cryptographic accumulator, indicative of a set of data items, in a data processing system (1), the method comprising:

   generating a plurality of group elements;
   defining a mapping between data items in said set and respective group elements;
   generating a cryptographic accumulator comprising the product of respective group elements related to the group elements mapped to the data items in the set; and
   publishing the cryptographic accumulator in the data processing system (1), the method further including generating each group element using a secret value $\gamma$ and a group generator g, wherein:

   the group elements comprise respective elements $g_i = g^{\gamma^i}$ for $i \in \{1, 2, 3, ..., n\}$ where $n$ is a predefined maximum number of data items in the set; and
   the mapping is defined between data items in the set and respective group elements $g_i$, wherein the cryptographic accumulator comprises the product of the group elements $g_{n+1-i}$ for values of $i$ for which the group element $g_i$ is mapped to a data item in said set, further including generating a witness for each data item in the set, each witness comprising the product of a respective different subset of the group elements, the subset for each witness being dependent on the data items in said set and the data item for which that witness is generated, wherein:

the group elements include auxiliary elements $g_{n+2} = g^{\gamma^{n+2}}$, $g_{n+3} = g^{\gamma^{n+3}}$, $g_{n+4} = g^{\gamma^{n+4}}$, ..., $g_{2n} = {\gamma^{2n}}$; and

for each data item in the set mapped to a group element $g_i$, the witness comprises the product of the group elements $g_{n+1-j+i}$ for all values of $j$ for which a group element $g_j$ is mapped to another data item in the set.

2. A method as claimed 1 wherein said mapping is defined between a numerical identifier associated with each data item and the respective group element.

3. A method as claimed in claim 2 wherein each data item comprises a cryptographic credential in which the associated numerical identifier is defined, the method being adapted such that the cryptographic accumulator is indicative of a set of valid cryptographic credentials.

4. A method as claimed in any preceding claim wherein said set is a dynamic set of data items, the method including periodically generating and publishing the cryptographic accumulator for the current set of data items.

5. A method as claimed in claim 4, including periodically generating the witnesses for said current set of data items.

6. A method as claimed in claim 1 or 5 including publishing each witness in the data processing system (1).

7. A computer program comprising program code means for causing a computer to perform the method of any preceding claim.

8. Apparatus for providing a cryptographic accumulator, indicative of a set of data items, in a data processing system (1), the apparatus comprising memory (4), and control logic (3) adapted to perform the method of any one of claims 1 to 6, the plurality of group elements being stored in said memory (4).

9. A data processing system (1) comprising a user computer (6), a verifier computer (7) and a data item management computer (2) each adapted for communication via a data communications network (15), wherein:

the data item management computer (2) is adapted to perform a method as claimed in any one of claims 1 to 6 for providing a cryptographic accumulator indicative of a set of data items which includes a user data item associated with said user computer (6);
the user computer (6) stores said user data item and a witness, corresponding to the user data item, for the cryptographic accumulator; and
the user computer (6) and verifier computer (7) are adapted for communication via the network (15) to implement a verification protocol proving knowledge by the user computer (6) of a witness corresponding to a data item in the set indicated by the cryptographic accumulator.

10. A system as claimed in claim 9 wherein said verification protocol is a zero-knowledge proof protocol.

**Patentansprüche**

1. Verfahren zum Bereitstellen eines kryptografischen Akkumulators in einem Daten-Verarbeitungssystem (1), wobei der Akkumulator eine Menge von Datenelementen angibt und das Verfahren umfasst:

Erzeugen einer Vielzahl von Gruppenelementen;
Festlegen einer Abbildung zwischen Datenelementen in der Menge und zugehörigen Gruppenelementen;
Erzeugen eines kryptografischen Akkumulators, der das Produkt zugehöriger Gruppenelemente umfasst, die mit den Gruppenelementen verknüpft sind, welche auf die Datenelemente in der Menge abgebildet werden; und Veröffentlichen des kryptografischen Akkumulators in dem Daten-Verarbeitungssystem (1), wobei das Verfahren ferner
das Erzeugen jedes Gruppenelements mit einem Geheimwert $\gamma$ und einem Gruppenerzeuger g beinhaltet, wobei:

die Gruppenelemente zugehörige Elemente $g_i = g^{\gamma i}$ für $i \in \{1, 2, 3, ..., n\}$ umfassen und n eine vorgegebene größte Anzahl von Datenelementen in der Menge darstellt; und

die Abbildung zwischen Datenelementen in der Menge und zugehörigen Gruppenelementen $g_i$ erklärt ist.

wobei der kryptografische Akkumulator das Produkt der Gruppenelemente $g_{n+1-i}$ für Werte von i umfasst, für die das Gruppenelement $g_i$ auf ein Datenelement in der Menge abgebildet wird, und ferner das Erzeugen eines Zeugen für jedes Datenelement in der Menge beinhaltet, wobei jeder Zeuge das Produkt einer zugehörigen verschiedenen Teilmenge der Gruppenelemente umfasst und die Teilmenge für jeden Zeugen unabhängig von den Datenelementen in der Menge und dem Datenelement ist, für die der Zeuge erzeugt wurde, wobei:

die Gruppenelemente Hilfselemente $g_{n+2} = g^{r^{n+2}}$, $g_{n+3} = g^{r^{n+3}}$,

$g_{n+4} = g^{r^{n+4}}$, ..., $g_{2n} = g^{r^{2n}}$ enthalten; und

für jedes Datenelement in der Menge, das auf ein Gruppenelement $g_i$ abgebildet wird, der Zeuge das Produkt der Gruppenelemente $g_{n+1-j+1}$ für alle Werte von j umfasst, für die ein Gruppenelement $g_j$ auf ein anderes Datenelement in der Menge abgebildet wird.

2. Verfahren nach Anspruch 1, wobei die Abbildung zwischen einem numerischen Kennzeichner, der jedem Datenelement zugehörig ist, und dem entsprechenden Gruppenelement definiert ist.

3. Verfahren nach Anspruch 2, wobei jedes Datenelement kryptografische Berechtigungsdaten umfasst, in denen der zugehörige numerische Kennzeichner festgelegt ist, wobei das Verfahren so ausgelegt ist, dass der kryptografische Akkumulator eine Menge zulässiger kryptografischer Berechtigungsdaten angibt.

4. Verfahren nach einem der vorangehenden Ansprüche, wobei es sich bei der Menge um eine dynamische Menge von Datenelementen handelt und das Verfahren das periodische Erzeugen und Veröffentlichen des kryptografischen Akkumulators für die momentane Menge von Datenelementen beinhaltet.

5. Verfahren nach Anspruch 4, das das periodische Erzeugen der Zeugen für die momentane Menge von Datenelementen beinhaltet.

6. Verfahren nach Anspruch 1 oder 5, wobei zu dem Verfahren das Veröffentlichen jedes Zeugen in dem Daten-Verarbeitungssystem (1) gehört.

7. Computerprogramm, das Computerprogramm-Codemittel umfasst, um einen Computers zu veranlassen, das Verfahren nach einem beliebigen vorangehenden Anspruch auszuführen.

8. Vorrichtung zum Bereitstellen eines kryptografischen Akkumulators in einem Daten-Verarbeitungssystem (1), wobei der Akkumulator eine Menge von Datenelementen angibt, die Vorrichtung einen Speicher (4) und eine Steuerlogik (3) umfasst, die zum Ausführen des Verfahrens nach irgendeinem der Ansprüche 1 bis 6 geeignet ist, und die Vielzahl von Gruppenelementen in dem Speicher (4) gespeichert wird.

9. Daten-Verarbeitungssystem (1), das einen Computer (6), einen Prüfcomputer (7) und einen Datenelement-Verwaltungscomputer (2) umfasst, die jeweils zum Datenaustausch über ein Datenübertragungs-Netzwerk (15) ausgelegt sind, wobei:

der Datenelement-Verwaltungscomputer (2) zum Ausführen eines Verfahrens nach einem der Ansprüche 1 bis 6 ausgelegt ist, um einen kryptografisches Akkumulator bereitzustellen, der eine Menge von Datenelementen angibt, die ein dem Nutzercomputer (6) zugehöriges Nutzer-Datenelement beinhaltet;

der Nutzercomputer (6) das Nutzer-Datenelement und einen Zeugen, der zu dem Nutzer-Datenelement gehört, für den kryptografischen Akkumulator speichert; und

der Nutzer-Computer (6) und der Prüfcomputer (7) zum Übertragen von Daten über das Netzwerk (15) ausgelegt sind, um ein Prüfprotokoll zu realisieren, das das Wissen eines Zeugen durch den Nutzer-Computer (6) zeigt, der zu einem Datenelement in der Menge gehört, die durch den kryptografischen Akkumulator angegeben wird.

10. System nach Anspruch 9, wobei es sich bei dem Prüfprotokoll um ein kenntnisfreies Prüfprotokoll handelt.

**Revendications**

1. Procédé pour produire un accumulateur cryptographique, révélateur d'un ensemble d'éléments de données, dans un système de traitement de données (1), le procédé comprenant :

   la génération d'une pluralité d'éléments de groupe,
   la définition d'un mappage entre des éléments de données dans ledit ensemble et des éléments de groupe respectifs,
   la génération d'un accumulateur cryptographique comprenant le produit d'éléments de groupe respectifs associés à des éléments du groupe mappés aux éléments de données dans l'ensemble ; et
   la publication de l'accumulateur cryptographique dans le système de traitement de données (1), le procédé comprenant en outre,
   la génération de chaque élément de groupe en utilisant une valeur secrète $\gamma$ et un groupe générateur g dans lequel :

   les éléments du groupe comprennent des éléments respectifs $g_i = g^{\gamma i}$ pour $i \in \{1, 2, 3, ..., n\}$, où n est un nombre maximum prédéfini d'éléments de données dans l'ensemble ; et
   le mappage est défini entre des éléments de données dans l'ensemble et les éléments de groupe respectifs $g_i$,

   dans lequel l'accumulateur cryptographique comprend le produit des éléments du groupe $g_{n+1-i}$ pour des valeurs de $i$ pour lesquelles l'élément de groupe $g_i$, est mappé à un élément de données dans ledit ensemble, incluant en outre la génération d'un témoin pour chaque élément de données dans l'ensemble, chaque témoin comprenant le produit d'un sous-ensemble respectif différent des éléments de groupe, le sous-ensemble pour chaque témoin dépendant des éléments de données dans ledit ensemble et l'élément de données pour lequel ce témoin est généré, dans lequel :

   les éléments de groupe incluent des éléments auxiliaires

   $$g_{n+2} = g^{\gamma^{n+2}}, \quad g_{n+3} = g^{\gamma^{n+3}}, \quad g_{n+4} = g^{\gamma^{n+4}}, \quad ..., \quad g_{2n} = g^{\gamma^{2n}} \text{ et ;}$$

   pour chaque élément de données dans l'ensemble mappé à un élément du groupe $g_i$, le témoin comprend le produit des éléments du groupe $g_{n+1-j+i}$ pour toutes les valeurs de $j$ pour lequel un élément du groupe $g_j$ est associé à un autre élément de données dans l'ensemble.

2. Procédé selon la revendication 1 dans lequel ledit mappage est défini entre un identificateur numérique associé à chaque élément de données et l'élément de groupe respectif.

3. Procédé selon la revendication 2, dans lequel chaque élément de données comprend une information d'identification cryptographique dans lequel l'identificateur numérique associé est définie, le procédé étant conçu de telle sorte que l'accumulateur cryptographique est indicatif d'un ensemble d'informations d'identification cryptographiques valides.

4. Procédé selon l'une quelconque des revendications précédentes, dans lequel ledit ensemble est un ensemble dynamique d'éléments de données, le procédé incluant la génération et la publication périodiques de l'accumulateur cryptographique pour l'ensemble d'éléments de données en cours.

5. Procédé selon la revendication 4, incluant la génération périodique des témoins pour ledit ensemble d'éléments de données en cours.

6. Procédé selon la revendication 1 ou 5 incluant la publication de chaque témoin dans le système de traitement de données (1).

7. Programme d'ordinateur comprenant des moyens de code de programme pour amener un ordinateur à exécuter le procédé selon l'une quelconque des revendications précédentes.

8. Dispositif pour fournir un accumulateur cryptographique, indicatif d'un ensemble d'éléments de données, dans un système de traitement de données (1), le dispositif comprenant une mémoire (4), et une logique de commande (3) adaptée pour exécuter le procédé selon l'une quelconque des revendications 1 à 6, la pluralité des éléments de groupe étant stockés dans ladite mémoire (4).

9.  Système de traitement de données (1) comprenant un ordinateur d'utilisateur (6), un ordinateur de vérification (7) et un ordinateur de gestion d'éléments de données (2) adaptés respectivement pour la communication via un réseau de communication de données (15), dans lequel :

    l'ordinateur de gestion d'éléments de données (2) est adapté pour exécuter un procédé selon l'une quelconque des revendications 1 à 6 pour fournir un accumulateur cryptographique indicatif d'un ensemble d'éléments de données qui inclut un élément de données d'utilisateur associé audit ordinateur d'utilisateur (6) ;
    l'ordinateur d'utilisateur (6) stocke ledit élément de données d'utilisateur et un témoin, correspondant à l'élément de données d'utilisateur, pour l'accumulateur cryptographique ;
    et l'ordinateur d'utilisateur (6) ainsi que l'ordinateur de vérification (7) sont adaptés à une communication par l'intermédiaire du réseau (15) pour mettre en oeuvre un protocole de vérification attestant de la connaissance par l'ordinateur d'utilisateur (6) d'un témoin correspondant à un élément de données dans l'ensemble indiqué par l'accumulateur cryptographique.

10. Système selon la revendication 9, dans lequel ledit protocole de vérification est un protocole de preuve à connaissance nulle.

1

issuer 2

memory 3

comms I/F 4

credential management logic 3

acc witnesses w

distributor 15

publish acc,w 16

user 6

prover logic 8

memory 9

comms I/F 10

witness w

acc

verifier (SP) 7

memory 12

comms I/F 13

verifier logic 11

Figure 1

user

verifier

request service

request credential

get w

send C(J),w

get acc
verification protocol

permit/deny access

Figure 4

20

set up

parameter
setup
(generate $g$) ~20

map
credentials
to $g$ ~21

generate
credentials ~22

generate
accumulator ~23

generate
witnesses $w_i$ ~24

send $C(i)$
$w_i$ to users ~25

publish
accumulator ~26

end

Figure 2

manage
acc

issue/revoke
credentials
and log ~30

end of
epoch? ~31    N

Y

update
accumulator ~32

update
witnesses $w_i$ ~33

publish
$acc$, $w_i$ ~34

Figure 3

get $w_j$

get $epoch_j = (acc, V)$

request service

request verification

user

send parameters

verifier

ZK verification protocol

permit/deny access

# Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1848143 A1

### Non-patent literature cited in the description

- Short group signatures. **BONEH et al.** Advances in Cryptology - CRYPTO 2004. Springer Verlag, 2004, vol. 3152, 41-55
- Dynamic accumulators and application to efficient revocation of anonymous credentials. **CAMENISCH ; LYSYANSKAYA.** Advances in Cryptology - CRYPTO 2002. Springer Verlag, 2002, vol. 2442, 61-76
- Universal accumulators with efficient nonmembership proofs. **JIANGTAO LI et al.** Lecture Notes in Computer Science. Springer, 2007, vol. 4521, 253-269
- Accumulators from bilinear pairings and applications. **LAN NGUYEN.** CT-RSA. Springer, 2005, vol. 3376, 275-292
- **ZHANG ; CHEN.** Cryptanalysis and improvement of an ID-based ad-hoc anonymous identification scheme. *CT-RSA 05,* 2005
- A new dynamic accumulator for batch updates. **PEIS-HUN WANG et al.** ICICS. Springer, 2007, vol. 4861, 98-112
- Hierarchical identity based encryption with constant size ciphertext. **BONEH et al.** Advances in Cryptology - EUROCRYPT 2005, 24th Annual International Conference on the Theory and Applications of Cryptographic Techniques. Springer, 22 May 2005, vol. 3494, 440-456
- Short signatures without random oracles. **DAN BONEH ; XAVIER BOYEN.** EUROCRYPT. Springer, 2004, vol. 3027, 56-73
- Full-domain subgroup hiding and constant-size group signatures. **BOYEN ; WATERS.** Public Key Cryptography. Springer, 2007, vol. 4450, 1-15
- **JAN CAMENISCH ; MARKUS STADLER.** Proof systems for general statements about discrete logarithms. *Technical Report TR 260, Institute for Theoretical Computer Science,* March 1997
- Signature schemes and anonymous credentials from bilinear maps. **CAMENISCH ; LYSYANSKAYA.** Advances in Cryptology - CRYPTO 2004. Springer Verlag, 2004, vol. 3152, 56-72
- Collusion Resistant Broadcast Encryption with Short Ciphertexts and Private Keys. **BONEH ; GENTRY ; WATERS.** Advances in Cryptology - CRYPTO 2005. Springer, 2005, vol. 3621, 258-275
- A cryptographic framework for the controlled release of certified data. **BANGERTER et al.** Security Protocols Workshop. Springer, 2004, vol. 3957, 20-42
- A signature scheme with efficient protocols. Security in Communication Networks. Springer Verlag, 2003, vol. 2576, 268-289